# EUROPÄISCHE PATENTSCHRIFT

(11) **EP 1 252 540 B1**
(45) Veröffentlichungstag und Bekanntmachung des Hinweises auf die Patenterteilung: **22.09.2004**
(21) Anmeldenummer: 01907373.3
(22) Anmeldetag: 16.01.2001
(51) Int. Cl.: G02B 6/38, G02B 6/42

(54) **OPTISCHES SENDE-/EMPFANGSMODUL MIT INTERNEM LICHTWELLENLEITER**
OPTICAL TRANSMITTING/RECEIVING MODULE COMPRISING AN INTERNAL OPTICAL WAVEGUIDE
MODULE EMETTEUR ET/OU RECEPTEUR OPTIQUE MUNI D'UN GUIDE D'ONDES LUMINEUSES INTERIEUR

(30) Priorität: 18.01.2000 DE 10001875
(43) Veröffentlichungstag der Anmeldung: 30.10.2002
(73) Patentinhaber: Infineon Technologies AG, 81669 München (DE)
(72) Erfinder: HURT, Hans, 93049 Regensburg (DE); WEIGERT, Martin, 14057 Berlin (DE); MÜLLER, Gustav, 94486 Osterhofen (DE); WITTL, Josef, 92331 Parsberg (DE)
(74) Vertreter: Graf Lambsdorff, Matthias, Dr.
(86) Internationale Anmeldenummer: PCT/DE2001/000185
(87) Internationale Veröffentlichungsnummer: WO 2001/053866

(56) Entgegenhaltungen:
- US-A- 5 032 898
- US-A- 5 687 270
- US-A- 5 960 141
- PATENT ABSTRACTS OF JAPAN vol. 006, no. 241 (P-158), 30. November 1982 (1982-11-30) & JP 57 138608 A (HITACHI SEISAKUSHO KK), 27. August 1982 (1982-08-27)
- PATENT ABSTRACTS OF JAPAN vol. 014, no. 400 (P-1098), 29. August 1990 (1990-08-29) & JP 02 151819 A (MATSUSHITA ELECTRIC IND CO LTD), 11. Juni 1990 (1990-06-11)

## Beschreibung

Die vorliegende Erfindung betrifft ein optisches Sende- und/oder Empfangsmodul nach dem Oberbegriff des Patentanspruchs 1 und Verfahren zu seiner Herstellung. Außerdem bezieht sich die vorliegende Erfindung auf einen Lichtwellenleiterstecker, der mit dem erfindungsgemäßen Modul zusammenwirkt.

Die vorliegende Erfindung liegt somit auf dem Gebiet der Herstellung optischer oder elektrooptischer Baugruppen oder Module, die üblicherweise eine Steckeraufnahme zum Anschluß und zur optischen Ankopplung geeigneter Kopplungspartner, beispielsweise optischer Lichtwellenleiter, aufweisen. Als Kopplungspartner sind auch andere optische oder elektrooptische Elemente - z.B. zu Zwecken galvanischer Trennungen auf ein weiteres elektrooptisches Modul - denkbar. Derartige Module weisen zur Wandlung elektrischer in optische bzw. zur Wandlung optischer in elektrische Signale elektrooptische Wandler auf, die einen im Rahmen der vorliegenden Erfindung auch als optisch aktive Zone bezeichneten lichtabstrahlenden (Sender) oder lichtsensitiven (Empfänger) Bereich aufweisen. Der elektrooptische Wandler ist auf einem Abschnitt eines Leadframes oder Leiterrahmens montiert, der auf diesen Abschnitt von einem Formkörper aus einer lichtdurchlässigen Vergußmasse umgeben ist. Die Vergußmasse wird von einem Modulgehäuse umschlossen, welche eine Gehäuseöffnung für den Durchtritt eines optischen Sende- oder Empfangsstrahlungsbündels aufweist.

Für einen hohen Kopplungswirkungsgrad bei der Einspeisung oder Ausspeisung optischer Signale in Lichtwellenleiter ist neben der elektrooptischen Transformation der Signale auch eine präzise Ankopplung der signalableitenden und/oder signalzuführenden Lichtwellenleiter (Kopplungspartner) erforderlich. Als Sender werden in der optischen Übertragungstechnik beispielsweise lichtemittierende Dioden (LED) oder horizontal strahlende Laserdioden eingesetzt. Diese haben bauartbedingt häufig eine große numerische Apertur, die für eine optische Kopplung mit hohem Wirkungsgrad die Verwendung von Linsen erfordert.

Aus der deutschen Offenlegungsschrift DE 197 11 138 A1 ist ein optisches Sende- und/oder Empfangsmodul bekannt, bei welchem ein Träger, wie ein Leadframe, auf welchem ein elektrooptischer Wandler montiert ist, unter Bildung eines Formkörpers mit einem formbaren Material umgeben wird, wobei der Formkörper eine der optischen Kopplung dienende Funktionsfläche, beispielsweise eine Linse oder eine Anschlagfläche, aufweist.

Weiterhin sind auch solche optischen Sende- und/oder Empfangsmodule bekannt, bei welchen zu ihrer Herstellung eine Gießform verwendet wird, durch die die Form und Größe des Formkörpers bestimmt wird und bei welchen nach dem Gieß- oder Spritzvorgang, bei welchem das lichtdurchlässige, formbare Material in die Gießform eingebracht wird, die Gießform als Modulgehäuse beibehalten wird. An dieses Gehäuse wird dann an der Lichtein- oder -austrittsseite ein Steckeraufnahmeteil für die Ankopplung eines Lichtwellenleitersteckers angeformt. Ein solches Modulgehäuse ist auch als cavity as interface (CAI) bekannt.

Bei den bisher bekannten CAI-Modulen ist bezüglich der Stekkeraufnahme von Nachteil, daß für den Anschluß an Lichtwellenleiter Stecker verwendet werden müssen, die ungeschützt hervorragende optische Endflächen des Lichtwellenleiters aufweisen. Diese Lichtwellenleiterstecker werden daher zumeist dahingehend modifiziert, daß die optischen Endflächen des Lichtwellenleiters durch einen relativ aufwendigen Klappenmechanismus geschützt werden. Die Verwendung dieser oder anderer Lichtwellenleiterstecker aufgrund der an dem Modul vorgesehenen Steckeraufnahme ist jedoch noch zusätzlich durch den sogenannten Kojiri-Effekt oder snag-Effekt beeinträchtigt, womit die unbeabsichtigte Beschädigung eines Lichtwellenleitersteckers aufgrund von Krafteinwirkung beim (auch unsachgemäß ausgeführten) Steckvorgang bezeichnet wird. Auch die hiergegen getroffenen Maßnahmen, wie Verrastmechanismen, Codierung gegen falsches Stecken, Rippen am Stecker/Gehäuse, Rückversetzen von Kontakten im Steckergehäuse, sind aufwendig und mit der Forderung nach einfacher und kostengünstiger Herstellung eines Lichtwellenleitersteckers nicht zu vereinbaren.

Es ist daher Aufgabe der vorliegenden Erfindung, ein optisches Sende- und/oder Empfangsmodul und ein Verfahren zu seiner Herstellung anzugeben, an welches ein einfach und kostengünstig herstellbarer Lichtwellenleiterstecker angekoppelt werden kann, der keine ungeschützt hervorragenden optischen Endflächen des Lichtwellenleiters aufweist.

Diese Aufgabe wird durch die kennzeichnenden Merkmale des Patentanspruchs 1 gelöst.

Ein derartiges optisches Sende- und/oder Empfangsmodul erlaubt die Konstruktion eines relativ einfachen Lichtwellenleitersteckers, der anders als die im Stand der Technik verwendeten Lichtwellenleiterstecker eine innenliegende optische Endfläche seines Lichtwellenleiters aufweist, relativ einfach an dem Steckeraufnahmeteil des Moduls befestigt werden kann und darüber hinaus relativ einfach und kostengünstig hergestellt werden kann.

Ein mit dem erfindungsgemäßen optischen Sende- und/oder Empfangsmodul zusammenwirkender Lichtwellenleiterstecker weist
- einen hülsenförmigen Steckerabschnitt auf, dessen Innenkontur der Außenkontur des Steckeraufnahmeteils des Moduls entspricht, wobei
- eine Endfläche eines Lichtwellenleiters derart in dem Lichtwellenleiterstecker angeordnet ist, daß sie in dem mit dem Modul zusammengesteckten Zustand mit der stekkerseitigen Endfläche des Lichtwellenleiterstücks optisch gekoppelt ist.

Das erfindungsgemäße Sende- und/oder Empfangsmodul erlaubt des weiteren eine weiter unten noch im Detail beschriebene Ausführungsform, bei der die wandlerseitige Endfläche des Lichtwellenleiterstücks mit geringem Abstand vor der Sendeoder Empfangsfläche des elektrooptischen Wandlers angeordnet ist, so daß auf eine Sammellinse verzichtet werden kann. Die Erfindung ist jedoch nicht auf diese Ausführungsform beschränkt, da es tatsächlich nur auf eine optische Kopplung ankommt. Es kann somit auch ein größerer räumlicher Abstand vorgesehen sein, beispielsweise dann, wenn zwischen dem elektrooptischen Wandler und dem Lichtwellenleiterstück noch ein Reflektorelement vorgesehen ist.

Bei der Herstellung eines erfindungsgemäßen optischen Sendeund/oder Empfangsmoduls sind zwei verschiedene Verfahrensvarianten denkbar.

Eine erste Ausführungsart eines Verfahrens zur Herstellung eines optischen Sende- und/oder Empfangsmoduls besteht darin, daß
a) in eine Gehäuseöffnung eines Modulgehäuses ein Lichtwellenleiterstück derart eingesetzt wird, daß es um jeweils vorbestimmte Längen in das Innere des Gehäuses hineinsteht und aus dem Gehäuse heraussteht,
b) ein Steckeraufnahmeteil derart geformt wird, daß an die äußere Gehäusewand und um den aus dem Modulgehäuse herausstehenden Teil des Lichtwellenleiterstücks ein Formteil mit einer definierten Außenkontur angeformt wird,
c) ein Leadframe, auf dem ein elektrooptischer Wandler montiert ist, in das Innere des Modulgehäuses eingeführt und der elektrooptische Wandler derart positioniert wird, daß er mit dem wandlerseitigen Ende des Lichtwellenleiterstücks optisch gekoppelt ist, und
d) das Innere des Modulgehäuses mit einer lichtdurchlässigen Vergußmasse gefüllt wird.

Eine zweite Ausführungsart eines Verfahrens zur Herstellung eines optischen Sende- und/oder Empfangsmoduls besteht darin, daß
a) in ein Modulgehäuse eine Gehäuseöffnung geformt und an deren Öffnungsrand ein rohr- oder hülsenförmig nach außen stehender Fortsatz mit definiertem Innendurchmesser angeformt wird,
b) ein Verschlußformstück derart gebildet wird, daß ein Lichtwellenleiterstück auf einem Abschnitt seiner Länge mit einer ringförmigen Anformung umgeben wird und das Verschlußformstück auf diesem Abschnitt einen Außendurchmesser aufweist, der geringfügig kleiner als der Innendurchmesser des Fortsatzes ist,
c) das Verschlußformstück mit dem unbedeckten Abschnitt des Lichtwellenleiterstücks voran in den hülsenförmigen Fortsatz und die Gehäuseöffnung eingeführt und in einer Position, in der das Lichtwellenleiterstück in das Innere des Modulgehäuses hineinragt, befestigt wird,
d) ein Leadframe, auf dem ein elektrooptischer Wandler montiert ist, in das Innere des Modulgehäuses eingeführt und der elektrooptische Wandler derart positioniert wird, daß er mit dem wandlerseitigen Ende des Lichtwellenleiterstücks optisch gekoppelt ist, und
e) das Innere des Modulgehäuses mit einer lichtdurchlässigen Vergußmasse gefüllt wird.

Im folgenden wird ein Ausführungsbeispiel eines erfindungsgemäßen optischen Sende- und/oder Empfangsmoduls und die zwei Verfahrensvarianten anhand der Zeichnungen näher erläutert. Es zeigen:
- Fig. 1: ein Ausführungsbeispiel für ein erfindungsgemäßes Sende- und/oder Empfangsmodul und ein mit diesem zusammenwirkender Lichtwellenleiterstecker;
- Fig. 2A, B: ein Herstellungsverfahren eines erfindungsgemäßen Sende- und/oder Empfangsmoduls gemäß einer ersten Ausführungsart;
- Fig. 3: ein Herstellungsverfahren eines erfindungsgemäßen Sende- und/oder Empfangsmoduls gemäß einer zweiten Ausführungsart.

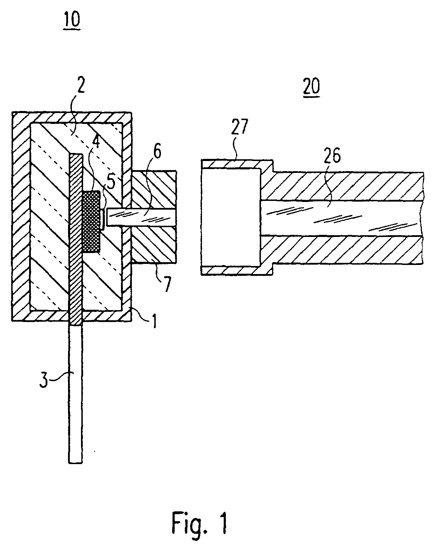

In der vereinfachten, schematischen Darstellung der Fig. 1 ist ein Ausführungsbeispiel eines erfindungsgemäßen Sendeund/oder Empfangsmoduls 10 und eines mit diesem zusammenwirkenden Lichtwellenleitersteckers 20 in einer Querschnittsansicht in der Ebene des Lichtwellenleiterstücks 6 und des Lichtwellenleiters 26 dargestellt.

Bei diesem Modul 10 ist ein aus einer lichtdurchlässigen Vergußmasse bestehender Formkörper 2 von einem allseits umschließenden Modulgehäuse 1 umgeben. Dieses Modulgehäuse 1 kann gleichzeitig die während des Herstellungsprozesses verwendete Gießform für den Formkörper 2 sein, die nach dem Gieß- oder Spritzvorgang, bei dem die Vergußmasse eingebracht wird, auf dem Formkörper 2 zurückgelassen wurde. Das Modulgehäuse 1 weist eine untere Öffnung für den Eintritt eines Leadframes oder Leiterrahmens 3 in den Formkörper 2 auf. Auf einer Lichtein- oder -austrittsseite ist eine Steckeraufnahme für die Anbringung eines Lichtwellenleitersteckers angeformt. Ein derartiges Modulgehäuse ist an sich im Stand der Technik als cavity as interface (CAI) bekannt.

Bei der Herstellung des erfindungsgemäßen Sende- und/oder Empfangsmoduls wird in ebenfalls an sich bekannter Weise ein zunächst räumlich zusammenhängendes Leadframe geformt und auf dafür vorgesehenen Abschnitten mit einem oder mehreren optoelektronischen Wandlern 5 versehen. Erst anschließend und zumeist zwischen verschiedenen Phasen eines Gieß- oder Spritzvorgangs werden einzelne Verbindungsstege zwischen verschiedenen Anschlußabschnitten des Leadframes aufgetrennt. Auch bei dem erfindungsgemäßen Modul können somit mehrere Wandler, d.h. im Prinzip eine beliebige Anzahl von Sendern und/oder Empfängern, auf zusammenhängenden Abschnitten des Leadframes oder im Endstadium voneinander getrennten Abschnitten des Leadframes montiert sein. Das Modul gemäß Fig. 1 ist nicht als oberflächenmontierbares, d.h. SMT-fähiges, Modul ausgelegt. Es wird stattdessen mit dem äußeren Anschlußpin des Leadframes 3 in eine Schaltungsplatine eingesteckt und auf deren Rückseite mit elektrischen Leiterbahnen verbunden oder bei einer mehrlagigen Platine mit Leiterbahnen einer inneren Metallisierungsebene verbunden. Es kann jedoch ebenso ein SMT-fähiges Modul konzipiert werden, bei welchem die elektrischen Anschlußabschnitte des Leadframes derart aus dem Modulgehäuse herausgeführt werden, daß sie in einer gemeinsamen Montageebene liegende Anschlußabschnitte aufweisen, so daß sie nach dem SMT-Verfahren auf einer Platine aufgelötet werden können.

In dem vorliegenden Ausführungsbeispiel der Fig. 1 wird ein elektrooptischer Wandler 5, also ein Sender, wie ein Halbleiterlaser, oder ein Empfänger, wie eine Halbleiterphotodiode, zunächst auf einem Submount 4 auf geeignete elektrisch leitende Weise, wie beispielsweise durch Leitpaste oder dergleichen, montiert, worauf der Submount 4 in eben solcher Weise auf einem dafür vorgesehenen Abschnitt des Leadframes 3 befestigt wird. Der Einfachheit der Darstellung halber sind weitere Maßnahmen der elektrischen Kontaktierung, etwa eine zusätzliche Bonddrahtverbindung nicht dargestellt.

Das erfindungsgemäße Modul 10 gemäß Ausführungsbeispiel der Fig. 1 ist als sogenannter Sidelooker konzipiert, d.h. die Strahlrichtung des ein- oder ausgekoppelten Strahlungsbündels ist parallel zur Ebene der Montageplatine (nicht dargestellt).

Ein wesentlicher Aspekt des erfindungsgemäßen Moduls 10 stellt die Steckeraufnahme dar. Diese besteht im wesentlichen aus einem Steckeraufnahmeteil 7 und einem in diesem eingeformten Lichtwellenleiterstück 6. Das Lichtwellenleiterstück 6 verläuft dabei von einer äußeren Stirnfläche des Steckeraufnahmeteils 7 zentral durch das Innere des Steckeraufnahmeteils 7 und durch eine Öffnung in dem Modulgehäuse 1 bis in das Innere des Formkörpers 2. Das wandlerseitige Ende des Lichtwellenleiterstücks 6 ist in einem kleinen Abstand von der Sende- oder Empfangsfläche des elektrooptischen Wandlers 5 angeordnet. Dadurch kann vorteilhafterweise auf eine zusätzliche Sammellinse verzichtet werden. Dies ist jedoch nicht wesentlich für die vorliegende Erfindung. Es kann ebenfalls vorgesehen sein, daß ein größerer Abstand zwischen dem elektrooptischen Wandler 5 und der wandlerseitigen Endfläche des Lichtwellenleiterstücks 6 vorgesehen ist, insbesondere in den Fällen, in denen ein Sende- oder Empfangsstrahlungsbündel innerhalb des Formkörpers 2 etwa durch ein geeignetes Reflektorelement umgelenkt werden soll. In diesen Fällen kann es wünschenswert oder erforderlich sein, an der Verbindungsfläche zwischen dem Formkörper 2 und dem Lichtwellenleiterstück 6 eine zusätzliche Sammellinse vorzusehen.

Vorzugsweise ist das steckerseitige Ende des Lichtwellenleiterstücks 6 bis an die Stirnfläche des Steckeraufnahmeteils 7 herangeführt, so daß sie mit dieser fluchtet. Sie kann jedoch auch geringfügig in das Innere des Steckeraufnahmeteils 7 hineinversetzt sein.

Das Steckeraufnahmeteil 7 weist eine definierte Außenkontur auf, die mit der Innenkontur eines hülsenförmigen Steckerabschnitts 27 eines Lichtwellenleitersteckers korrespondiert. Die Außenkontur des Steckeraufnahmeteils 7 kann beispielsweise kreisförmig sein, wobei der Außendurchmesser des Steckeraufnahmeteils 7 und der Innendurchmesser des hülsenförmigen Steckerabschnitts 27 des Lichtwellenleitersteckers 20 derart gewählt sind, daß der hülsenförmige Abschnitt 27 über das Steckeraufnahmeteil 7 geschoben werden kann. Zusätzlich können an der Außenkontur des Steckeraufnahmeteils 7 geeignete Befestigungselemente, wie Einrastelemente oder bajonettartige Verschlußelemente, vorgesehen sein, so daß eine sichere Befestigung des Lichtwellenleitersteckers 20 an dem Modul 10 hergestellt werden kann.

Der ebenfalls vereinfacht und schematisch dargestellte Lichtwellenleiterstecker 20 ist Teil eines Lichtwellenleiterkabels, in dessen Innerem ein Lichtwellenleiter 26 angeordnet ist. Die Endfläche des Lichtwellenleiters 26 fluchtet mit einer Bodenfläche des hülsenartigen Steckerabschnitts 27, und liegt somit im Inneren des Lichtwellenleitersteckers 20. Dies bietet größtmöglichen Schutz für die optische Endfläche des Lichtwellenleiters 26. Gleichwohl gewährleistet die vorliegende Erfindung, daß im zusammengesteckten Zustand des Moduls 10 und des Lichtwellenleitersteckers 20, daß sich die Endflächen des Lichtwellenleiterstücks 6 und des Lichtwellenleiters 26 direkt gegenüberliegen und somit optisch miteinander gekoppelt sind. Es kann zusätzlich vorgesehen sein, daß im nicht Gebrauchs-Zustand des Lichtwellenleitersteckers 20 die Öffnung des hülsenartigen Steckerabschnitts 27 durch geeignete, an dem Stecker befestigte Elemente verschlossen wird, um für einen zusätzlichen Schutz der optischen Endfläche des Lichtwellenleiters 26 vor Umgebungseinflüssen zu sorgen.

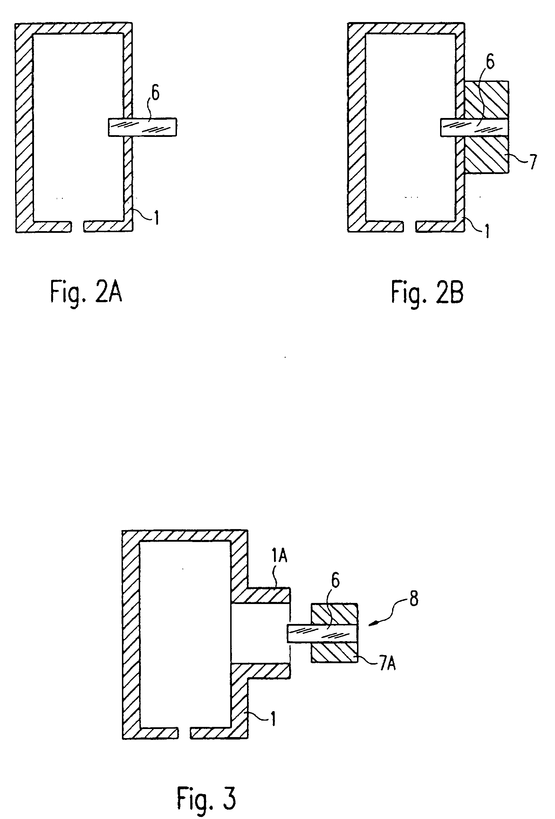

Für die Herstellung und Befestigung des Steckeraufnahmeteils 7 und des Lichtwellenleiterstücks 6 an dem Modulgehäuse 1 können zwei grundlegend verschiedene Verfahrensvarianten gemäß den Fig. 2A, B und Fig. 3 zum Einsatz kommen, die im folgenden erläutert werden.

Gemäß Fig. 2A wird ein Modulgehäuse 1, beispielsweise aus Kunststoff, hergestellt und mit zwei Gehäuseöffnungen versehen. In eine seitliche Gehäuseöffnung wird ein separat gefertigtes Lichtwellenleiterstück 6 derart eingeführt, daß es jeweils um vorbestimmte Längen in das Innere des Modulgehäuses 1 hineinsteht und aus dem Modulgehäuse 1 heraussteht. Eine untere Öffnung in dem Modulgehäuse 1 ist dafür vorgesehen, in einem späteren Verfahrensschritt ein Leadframe in das Modulgehäuse 1 einzuführen und anschließend das Innere des Modulgehäuses 1 mit einem lichtdurchlässigen Vergußmaterial zu befüllen.

Im nächsten Verfahrensschritt wird gemäß Fig. 2B an den aus dem Modulgehäuse 1 herausstehenden Abschnitt des Lichtwellenleiterstücks 6 ein Steckeraufnahmeteil 7 angeformt. Das Stekkeraufnahmeteil 7 kann beispielsweise aus Kunststoff angespritzt werden.

Anschließend kann zur Herstellung des Moduls gemäß Fig. 1 ein mit einem elektrooptischen Wandler 5 bestückter Leadframe 3 durch die untere Öffnung des Modulgehäuses 1 in dieses eingeführt werden und gegebenenfalls unter Zuhilfenahme einer geeigneten Positioniervorrichtung in eine Endposition gebracht werden, in der der elektrooptische Wandler 5 der wandlerseitigen Endfläche des Lichtwellenleiterstücks 6 direkt und mit einem geringen Abstand gegenübersteht. Dann wird das lichtdurchlässige Vergußmaterial durch die untere Öffnung des Modulgehäuses 1 eingefüllt.

Bei der Verfahrensvariante gemäß Fig. 3 wird zunächst ein Modulgehäuse 1 hergestellt, bei welchem eine seitliche Öffnung mit relativ großem Innendurchmesser und einem an die Öffnungsränder angesetzten hülsenartigen Fortsatz 1A angeformt wird. Eine solche Gehäusebauform ist an sich bereits bekannt, wobei der hülsenartige Fortsatz 1A als Steckeraufnahme verwendet wird. Im vorliegenden Fall wird jedoch ein Verschlußformstück 8 separat derart gebildet, daß ein Lichtwellenleiterstück 6 auf einem Abschnitt seiner Länge mit einer ringförmigen Anformung 7A umgeben wird. Dieses Verschlußformstück 8 wird nach seiner Fertigstellung in die Öffnung des hülsenartigen Fortsatzes 1A eingeführt, so daß es diese Öffnung formschlüssig verschließt. Zu diesem Zweck weist das Verschlußformstück 8 im Bereich der ringförmigen Anformung 7A einen Außendurchmesser auf, der geringfügig kleiner als der Innendurchmesser des hülsenartigen Fortsatzes 1A ist. Die ringförmige Anformung 7A kann beispielsweise aus Kunststoff an das Lichtwellenleiterstück 6 angespritzt werden. Das fertiggestellte Verschlußformstück 8 wird dann mit dem unbedeckten Abschnitt des Lichtwellenleiterstücks 6 voran in den hülsenartigen Fortsatz 1A und die Gehäuseöffnung eingeführt und in einer Position, in der das Lichtwellenleiterstück 6 in das Innere des Modulgehäuses 1 hineinragt, in geeigneter Weise befestigt. Anschließend wird wie bei der ersten Verfahrensvariante ein mit einem elektrooptischen Wandler 5 bestückter Leadframe 3 durch die untere Gehäuseöffnung eingeführt, in eine definierte Endposition gebracht und das Innere des Modulgehäuses 1 mit dem lichtdurchlässigen Vergußmaterial ausgefüllt.

## Patentansprüche

1. Optisches Sende- und/oder Empfangsmodul (10) mit
- einem Leadframe (3), auf dessen Endabschnitt ein elektrooptischer Wandler (5) montiert ist, und
- einem Modulgehäuse (1), in dessen inneren Hohlraum der Endabschnitt des Leadframe (3) durch eine erste Gehäuseöffnung hineinragt und der Hohlraum eine zweite Gehäuseöffnung für den Durchtritt eines optischen Sende- oder Empfangsstrahlungsbündels von oder zu dem elektrooptischen Wandler (5) aufweist, und
- einem sich im Bereich der Gehäuseöffnung nach außen erstreckenden und an der äußeren Gehäusewand angeordneten Steckeraufnahmeteil (7; 1A),
**dadurch gekennzeichnet, daß**
- das Modulgehäuse (1) einstückig geformt ist und den Hohlraum allseits umschließt und der Hohlraum vollständig mit einer lichtdurchlässigen Vergußmasse gefüllt ist,
- das Steckeraufnahmeteil (7; 1A) nur auf einem um die Gehäuseöffnung verlaufenden und mit der Gehäuseöffnung in einer gemeinsamen Ebene liegenden Randabschnitt befestigt ist, und
- ein Lichtwellenleiterstück (6) sich von der Umgebung einer äußeren Stirnfläche des Steckeraufnahmeteils (7; 1A) ausgehend durch das Innere des Steckeraufnahmeteils (7; 1A) und die Gehäuseöffnung bis in das Innere des Formkörpers (2) erstreckt und mit dem elektrooptischen Wandler (5) optisch gekoppelt ist.

2. Modul nach Anspruch 1,
**dadurch gekennzeichnet, daß**
- das Steckeraufnahmeteil (7) nicht einstückig mit dem Modulgehäuse (1) gebildet ist.

3. Modul nach Anspruch 1,
**dadurch gekennzeichnet, daß**
- das Steckeraufnahmeteil (1A) einen mit dem Modulgehäuse (1) einstückig geformten hülsenartigen Fortsatz (1A) bildet.

4. Lichtwellenleiterstecker (20), der mit dem Modul (10) nach einem der Ansprüche 1 bis 3 zusammenwirkt, und
- einen hülsenförmigen Steckerabschnitt (27) aufweist, dessen Innenkontur der Außenkontur des Steckeraufnahmeteils (7; 1A) des Moduls (10) entspricht, wobei eine Endfläche eines Lichtwellenleiters (26) derart angeordnet ist, daß sie mit der steckerseitigen Endfläche des Lichtwellenleiterstücks (6) im zusammengesteckten Zustand optisch gekoppelt ist.

## Claims

1. Optical transmitting and/or receiving module (10) comprising
- a lead frame (3), on whose end section an electro-optical transducer (5) is mounted, and
- a module housing (1), into whose inner cavity the end section of the lead frame (3) projects through a first housing opening and the cavity has a
- second housing opening for the passage of an optical transmitting or receiving radiation beam from or to the electo-optical transducer (5), and
- a plug receptacle part (7; 1A), which extends outwards in the region of the housing opening and is arranged on the outer housing wall,
**characterized in that**
- the module housing (1) is moulded in one piece and encloses the cavity on all sides and the cavity is completely filled with a transparent potting compound,
- the plug receptacle part (7; 1A) is only fixed on an edge section which runs around the housing opening and lies in a common plane with the housing opening, and
- an optical waveguide piece (6), proceeding from the surroundings of an outer end area of the plug receptacle part (7; 1A), extends through the interior of the plug receptacle part (7; 1A) and the housing opening right into the interior of the moulded body (2) and is optically coupled to the electro-optical transducer (5).

2. Module according to Claim 1,
**characterized in that**
- the plug receptacle part (7) is not formed in one piece with the module housing (1).

3. Module according to Claim 1,
**characterized in that**
- the plug receptable part (1A) forms a sleeve-like extension (1A) moulded in one piece with the module housing (1).

4. Optical waveguide plug (20), which interacts with the module (10) according to one of Claims 1 to 3 and has
- a sleeve-shaped plug section (27) whose inner contour corresponds to the outer contour of the plug receptacle part (7; 1A) of the module (10), an end area of an optical waveguide (26) being arranged in such a way that it is optically coupled to the plug-side end area of the optical waveguide piece (6) in the plugged-together state.

## Revendications

1. Module (10) optique d'émission et/ou de réception, comprenant :
- un leadframe(3) sur le tronçon d'extrémité duquel est monté un transducteur (5) opto-électronique, et
- un boîtier (1) de module, dans la cavité intérieure duquel le tronçon d'extrémité du leadframe (3) pénètre en passant par une première ouverture du boîtier et la cavité a une deuxième ouverture de boîtier pour le passage d'un faisceau de rayonnement optique d'émission ou de réception provenant du transducteur (5) opto-électronique ou y allant, et
- une partie (7; 1A) de réception de connecteur, s'étendant vers l'extérieur dans la zone de l'ouverture du boîtier et disposée sur la partie extérieure du boîtier,
**caractérisé en ce que**
- le boîtier (1) du module est d'un seul tenant et entoure la cavité de tout côté et la cavité est emplie complètement d'une composition de scellement transparente,
- la partie (7; 1A) de réception du connecteur n'est fixée qu'à un tronçon marginal s'étendant autour de l'ouverture du boîtier et se trouvant dans un plan commun avec l'ouverture du boîtier, et
- un tronçon (6) de guide d'ondes lumineuses s'étend en partant de ce qui est autour d'une surface frontale extérieure de la partie (7; 1A) de réception du connecteur, en passant par l'intérieur de la partie (7; 1A) de réception du connecteur et par l'ouverture du boîtier, jusqu'à l'intérieur de la pièce (2) moulée et est couplé optiquement avec le transducteur (5) opto-électronique.

2. Module suivant la revendication 1,
**caractérisé en ce que**,
- la partie (7) de réception du connecteur n'est pas d'un seul tenant avec le boîtier (1) du module.

3. Module suivant la revendication 1,
**caractérisé en ce que**
- la partie (1A) de réception du connecteur forme un prolongement (1A) en forme de manchon d'un seul tenant avec le boîtier (1) du module.

4. Connecteur (20) de guide d'ondes lumineuses, qui coopère avec le module (10) suivant l'une des revendications 1 à 3 et qui a un tronçon (27) de connecteur en forme de manchon, dont le contour intérieur correspond au contour extérieur de la partie (7; 1A), de réception du connecteur, du module (10), une surface d'extrémité d'un guide (26) d'ondes lumineuses étant disposée de manière à être couplée optiquement à l'état enfilé, à la surface d'extrémité, du côté du connecteur, du tronçon (6) de guide d'ondes lumineuses.
